(19) **Europäisches Patentamt**
**European Patent Office**
**Office européen des brevets**

(11) **EP 1 270 275 B1**

(12) **EUROPÄISCHE PATENTSCHRIFT**

(45) Veröffentlichungstag und Bekanntmachung des Hinweises auf die Patenterteilung:
**14.03.2007 Patentblatt 2007/11**

(51) Int Cl.:
**B60C 23/04** *(2006.01)*

(21) Anmeldenummer: **02012986.2**

(22) Anmeldetag: **12.06.2002**

(54) **Verfahren und Vorrichtung zur Überwachung von Reifendrücken**

Method and device for the monitoring of tyre pressures

Méthode et dispositif pour la surveillance des pressions des pneumatiques

(84) Benannte Vertragsstaaten:
**DE ES FR GB IE IT PT SE TR**

(30) Priorität: **26.06.2001 DE 10130640**

(43) Veröffentlichungstag der Anmeldung:
**02.01.2003 Patentblatt 2003/01**

(73) Patentinhaber: **ADAM OPEL AG**
**65423 Rüsselsheim (DE)**

(72) Erfinder:
• **Dori, Claudio, Dipl.-Ing.**
**64289 Darmstadt (DE)**
• **Gutjahr, Lothar, Dipl.-Ing.**
**65239 Hochheim (DE)**
• **Salm, Markus, Dipl.-Ing.**
**65239 Hochheim (DE)**

(56) Entgegenhaltungen:
**EP-A- 0 391 922        WO-A-01/30595**
**US-A- 4 893 110**

## EP 1 270 275 B1

**Beschreibung**

Die Erfindung betrifft ein Verfahren und eine Vorrichtung zur Überwachung von Reifendrücken nach dem Oberbegriff des Anspruchs 1 bzw. 13.

Bis heute sind Reifenluft-Überwachungssysteme bekannt, die dem Fahrer durch Warnmeldungen, die im Instrument oder Display angezeigt werden, auf zu niedrigen Luftdruck oder abnormale Druckverluste hinweisen.

Die EP-B1-0 391 922 beschreibt einen Reifendrucksensor für Kraftfahrzeuge, der eine geschwindigkeitsabhängige Schwellwertanpassung derart durchführt, dass der Fahrer bei Überschreiten einer Druck-basierten zulässigen Höchstgeschwindigkeit gewarnt wird.

Da der Reifendruck unter anderem auch von der jeweils vorherrschenden Temperatur beeinflusst wird, führen einfache Systeme, die sich nur an fixen Druckschwellwerten orientieren, häufig zu Fehlwarnungen. Um das Risiko von Fehlwarnungen dennoch zu reduzieren arbeiten derartige Systeme herkömmlicherweise mit Schwellwerten, die zum Teil erheblich unter den Drucknominalwerten liegen. Im Fall eines Druckverlustes erfolgt die Warnmeldung an den Fahrer sehr spät, da der Reifenluftdruck sich erst beträchtlich verringert haben muss, damit der Schwellwert unterschritten und in Folge eine Warnung oder ein Alarm ausgelöst wird.

Die EP-B1-0 597 940 beschreibt ein Verfahren, bei welchem auf einer für einen Reifen durchgeführten Temperaturmessung basierend die in dem Reifen enthaltene Luftmasse geschätzt wird. Hierbei werden unter Bildung von Temperaturserien Abweichungen von Minimal- und Maximaltemperaturwerten erfasst und bei Abweichungen unterhalb eines Schwellwertes die geschätzte Luftmasse mit einer minimal notwendigen Luftmasse für den Reifen verglichen.

Ferner ist in "ATZ Automobiltechnische Zeitung", 102(2000)11, Seiten 950-956 ein Reifendruck-Kontrollsystem offenbart, welches für die Berechnung von Reifendruck-Warngrenzen den isochoren Zusammenhang zwischen Druck und Temperatur benutzt. Basierend auf einem vorgegebenen Solldruck und der Temperatur bei einer durchgeführten Kalibrierung werden für aktuelle Reifentemperaturen die jeweiligen Warngrenzwerte ermittelt.

Aufgabe der Erfindung ist es, ein gegenüber dem aufgezeigten Stand der Technik wesentlich verbessertes Reifendruck-Überwachungssystem bereitzustellen.

Eine weitere Aufgabe der Erfindung liegt insbesondere darin, die für Warnmeldungen maßgeblichen Druckgrenzwerte unter Gewährleistung hoher Zuverlässigkeit flexibler zugestalten und in deren Anpassungsfähigkeit an jeweils spezifisch vorliegende Randbedingungen weiter zu erhöhen.

Die erfindungsgemäße Lösung der Aufgabe ist durch ein Verfahren mit den Merkmalen des Anspruchs 1 sowie durch eine Vorrichtung mit den Merkmalen des Anspruchs 13 gekennzeichnet.

Vorteilhafte und/oder bevorzugte Ausführungsformen bzw. Weiterbildungen sind Gegenstand der jeweiligen Unteransprüche.

Erfindungsgemäß ist zur Überwachung von Reifendrücken bei einem Kraftfahrzeug vorgesehen, wenigstens einen auf einem Reifendruck-Sollwert basierenden Reifendruck-Minimalgrenzwert in Abhängigkeit gemessener, aktueller Reifendrücke nachzuführen bzw. entsprechend zu adaptieren.

Von Vorteil hierbei ist insbesondere, dass auch Druckverluste von Reifen erfassbar sind, deren aktuelle Reifendrücke oberhalb von Soll- oder Normwerten liegen. Mit der Erfindung werden somit auch bei bewusster Erhöhung der Reifendrücke, beispielsweise aufgrund hoher Zuladung oder bei Ziehen eines Anhängers die Reifendrücke optimal überwacht. Folglich ist die Systemzuverlässigkeit hierdurch wesentlich verbessert.

In bevorzugter Ausführung hat es sich als praktisch erwiesen, zum Adaptieren von Reifendruck-Minimalgrenzwerten jeweils die aktuellen Reifendrücke von zumindest zwei, insbesondere einer Achse zugeordneten Reifen gegenüber vorgebbaren Reifendruckparametern zu vergleichen.

Durch Bildung von Druckdifferenzen auf Basis von gemessenen Reifendrücken und von Sollvorgaben wird in zweckmäßiger Weiterbildung zunächst überprüft, ob die Reifendrücke der Reifen einer Achse bewusst erhöht und/oder die gemessenen Reifendrücke derart ungleichmäßig sind, dass durch Auslösen einer Warnanzeige einer Gefahrensituation vorgebeugt wird.

Die Erfindung sieht ferner vor, dass bereits bei Vorliegen von wenigstens einem gegenüber einem Solldruck höheren Reifendruck und einer gegenüber einer vorgebbaren maximalen Druckdifferenz gleichen oder geringeren Druckdifferenz zwischen den überprüften Reifendrücken der entsprechende wenigstens eine Reifendruck-Minimalgrenzwert angehoben wird.

Damit nach einer solchen Anhebung des Minimalgrenzwertes die Überwachung aller diesem Grenzwert zugeordneten Reifendrücke sichergestellt ist, ist ferner vorgesehen, das Anheben des Minimalgrenzwertes in funktionaler Abhängigkeit zu dem gegebenenfalls höheren gemessenen Reifendruck durchzuführen.

Sind die verglichenen Reifendrücke niedriger oder geringer als der Solldruck wird in bevorzugter Weise der wenigstens eine Sollwert-basierte Reifendruck-Minimalgrenzwert für die weitere Überwachung verwendet.

In zweckmäßiger Weise sieht die Erfindung ferner vor, wenigstens zwei unterschiedlich hohe adaptierbare Reifendruck-Minimalgrenzwerte bereitzustellen, um den Fahrer bereits bei einem geringeren Druckverlust zu warnen und bei hohem Druckverlust zu alarmieren.

2

Darüber hinaus ist vorgeschlagen, die Reifendrücke in Bezug auf einen schnellen Druckverlust zu überwachen, so dass auch das frühzeitige Erkennen eines Lecks oder undichten Ventils sichergestellt ist und der Fahrer entsprechend gewarnt wird.

Besonders zweckmäßig ist es überdies, die Reifendruck-Minimalgrenzwerte ferner in Abhängigkeit gemessener Temperaturwerte zu adaptieren, so dass die für die Grenzwerte maßgeblichen Schwellwerte enger zum Soll- oder Normdruck gesetzt werden können, ohne dass Temperaturschwankungen zu Fehlerwarnungen führen. Ein frühzeitiges Warnen bei Druckverlusten ist folglich weiter verbessert.

Alternativ oder ergänzend kann zur zusätzlichen Erhöhung der Fehlersicherheit ferner der barometrische Höhendruck in die Adaption der Schwellwerte bzw. der mittels der Schwellwerte definierten minimalen Druckgrenzwerte einfließen.

Die Erfindung erhöht folglich die aktive Sicherheit des überwachten Fahrzeuges wesentlich, welches aufgrund des im Wesentlichen vollständigen Ausschlusses von Fehlwarnungen eine wesentliche Steigerung der Systemzuverlässigkeit zur Folge hat.

Die Erfindung wird nachfolgend anhand einer bevorzugten Ausführungsform unter Bezugnahme auf die beigefügte Zeichnung beispielhaft beschrieben. Es zeigt:

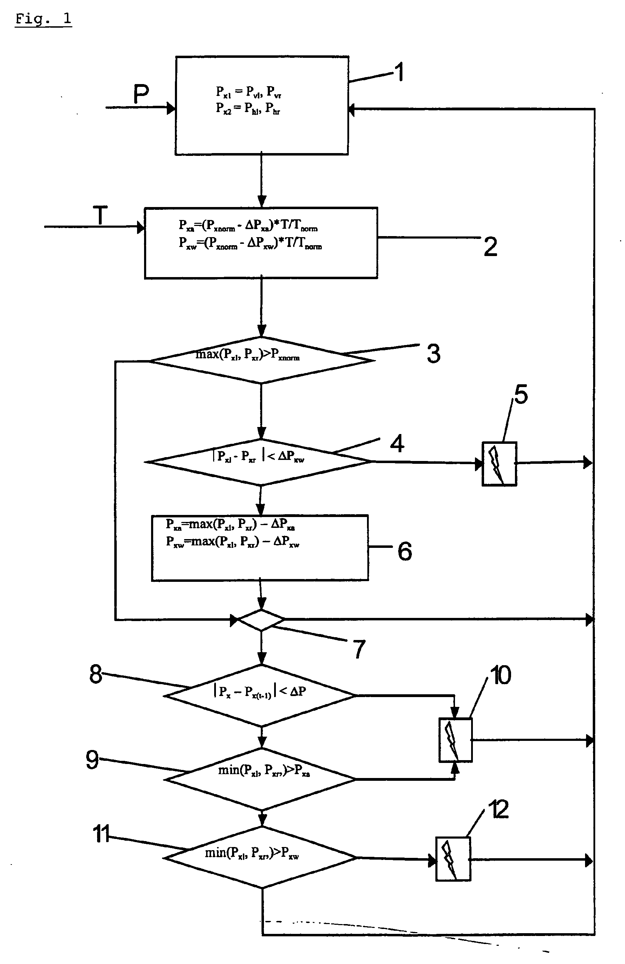

Fig. 1    ein stark vereinfachtes Flussdiagramm eines bevorzugten erfindungsgemäßen Vorgehens zur Reifendruck-Überwachung;

Bezugnehmend auf Fig. 1 werden mittels nicht dargestellten, zweckmäßigerweise in den einzelnen Fahrzeugreifen oder am Ventil angeordneten Sensoren die Reifendrücke P der einzelnen Reifen gemessen und in einer Übergabeeinrichtung 1, praktische Weise einem Speicher zur Weiterverarbeitung durch das erfindungsgemäße, beispielhafte Reifendruck-Überwachungssystem erfasst. Gemäß Fig. 1 umfassen die den Reifen der Vorderachse zugeordneten Reifendrücke $P_{x1}$ die Reifendrücke $P_{vl}$ und $P_{vr}$, wobei $P_{vl}$ der Reifendruck vorne links und $P_{vr}$ der Reifendruck vorne rechts ist. Entsprechend sind $P_{hl}$ der Reifendruck hinten links und $P_{hr}$ der Reifendruck hinten rechts, d.h. die der Hinterachse zugeordneten Reifendrücke $P_{x2}$.

Basierend auf in einer Steuereinrichtung 2 jeweils für die Vorder- und Hinterreifen abgelegten Soll- bzw. Normdruckwerten $P_{xnorm}$ und Schwellwerten $\Delta P_{xw}$ und $\Delta P_{xa}$ werden für die jeweiligen Reifen einer Achse "x" Reifendruck-Minimalgrenzwerte $P_{xw}$ und $P_{xa}$ festgesetzt, bei deren Unterschreiten eine Warnmeldung bzw. eine Alarmmeldung ausgelöst wird.

Beträgt zum Beispiel der Normdruckwert $P_{xnorm}$ = 2.2 bar und soll bereits bei einem geringeren Druckverlust von $\Delta P_{xw}$ = 0.3 bar unter dem Normdruckwert eine Warnmeldung für den Fahrer erzeugt werden, so beträgt der Minimalgrenzwert $P_{xw}$ = 1.9 bar. Zum Auslösen einer Alarmmeldung bei einem höheren Druckverlust beispielsweise von $\Delta P_{xa}$ = 0.6 bar wird der zweite Minimalgrenzwertes $P_{xa}$ entsprechend auf 1.6 bar gesetzt.

Die Vorgabe der Normdruckwerte und der damit verbundenen Schwellwerte erfolgt üblicher Weise bei einer Normtemperatur $T_{norm}$. Um die Einflüsse jeweils aktueller Temperaturen T mit zu berücksichtigen, werden von der Steuereinrichtung 2 die Schwellwerte $\Delta P_{xw}$, $\Delta P_{xa}$ bzw. die Minimalgrenzwerte $P_{xw}$, $P_{xa}$ auf für die aktuellen Temperaturen T gültige Werte umgerechnet, beispielsweise mittels des isochoren Zusammenhangs von Druck und Temperatur die Minimalgrenzwerte $P_{xw}$, $P_{xa}$ mit einem Faktor $T/T_{norm}$ multipliziert. Für die aktuellen Temperaturwerte T werden mittels Sensoren zweckmäßiger Weise die Temperaturen in den Reifen gemessenen. Alternativ kann jedoch auch die Fahrzeug-Außentemperatur gemessen werden.

Es sei an dieser Stelle darauf hingewiesen, dass, da die Vorgabe der Normdruckwerte und der damit verbundenen Schwellwerte üblicher Weise auch bei einem Normluftdruck erfolgt, alternativ oder ergänzend ferner der barometrische Höhendruck mittels Sensoren erfasst und für die Konvertierung der Schwellwerte $\Delta P_{xw}$, $\Delta P_{xa}$ bzw. der Minimalgrenzwerte $P_{xw}$, $P_{xa}$ in ähnlicher Weise zur weiteren Erhöhung der Fehlersicherheit genutzt werden kann.

Die Minimalgrenzwerte $P_{xw}$, $P_{xa}$ können, wie beim vorliegenden Ausführungsbeispiel jeweils für jeden Reifen der Achsen berechnet werden. Alternativ ist vorgesehen, die jeweiligen Minimalgrenzwerte $P_{xw}$, $P_{xa}$ für die Vorderund Hinterräder auf einheitliche Werte zu setzen.

Eine Kontrolleinrichtung 3 überprüft daraufhin, ob der gemessene linke und/oder rechte Reifendruck $P_{xl}$, $P_{xr}$ einer jeden Achse "x" oberhalb des zugeordneten Normdrückes $P_{xnorm}$ liegt. Ist dieses nicht der Fall geht der Überwachungsalgorithmus für die entsprechende Fahrzeugachse direkt zu einem Bestätigungsschritt 7 über, der an späterer Stelle beschrieben wird.

Liegt wenigstens der Druck eines Reifens einer Achse "x" oberhalb des zugeordneten Normdruckwertes $P_{xnorm}$, überprüft ein Vergleicher 4, ob die Druckdifferenz zwischen beiden der entsprechenden Achse zugeordneten Reifen größer ist als ein vorgegebener Maximaldifferenzwert. Da im vorliegenden Ausführungsbeispiel der Maximaldifferenzwert gleich dem Warnschwellwert $\Delta P_{xw}$ ist, lautet die Vorschrift:

$$\Delta P_{hl} - P_{hr} \Delta < \Delta P_{xw}.$$

Ist die Druckdifferenz zwischen beiden Reifen größer als die maximal Zulässige, wird eine Warnanzeige 5 ausgelöst, die auf ungleichmäßige Reifendrücke hinweist. Die Überwachungsroutine beginnt daraufhin von Neuem.

Liegt die Druckdifferenz noch innerhalb des zulässigen, tolerierbaren Druckdifferenzfensters, passt eine Nachführeinrichtung 6 die Reifendruck-Minimalgrenzwert $P_{xw}$ und $P_{xa}$ an die tatsächlichen Reifendrücke $P_{xl}$ und/oder $P_{xr}$ an. Wie vorstehend beschrieben, liegt wenigstens einer der Reifendrücke $P_{xl}$, $P_{xr}$ oberhalb des Normdruckes $P_{xnorm}$, wobei die Druckdifferenz noch innerhalb der maximal zulässigen Differenz ist. Dies kann beispielsweise der Fall sein, wenn aufgrund von hoher Zuladung oder dem Ziehen eines Anhängers die Reifendrücke erhöht sind. Damit jeder Reifen hinsichtlich zulässiger Reifendruck-Minimalgrenzwerte überprüfbar bleibt, werden zur Adaption der jeweiligen Reifendruck-Minimalgrenzwerte $P_{xw}$ und $P_{xa}$ die Schwellenwerte $\Delta P_{xw}$ bzw. $\Delta P_{xa}$ auf den höheren Reifendruck $P_{xl}$ oder $P_{xr}$ bezogen, d.h. für eine Achse "x" gilt gemäß Ausführungsbeispiel:

$$P_{xw} = \max(P_{xl}, P_{xr}) - \Delta P_{xw} \text{ und } P_{xa} = \max(P_{xl}, P_{xr}) - \Delta P_{xa}.$$

Beträgt zum Beispiel der linke Reifendruck $P_{xl}$ = 2.7 bar und der rechte Reifendruck $P_{xr}$ = 2.6 bar, so wird die Minimalgrenzwerte $P_{xa}$ und $P_{xw}$ entsprechend auf 2.1 bar bzw. 2.4 bar angehoben.

Schritt 7 gemäß Fig. 1 sieht eine nochmalige Bestätigung aller gemessenen und adaptierten Parameter vor. Ist die Bestätigung negativ wird die Überwachungsroutine abgebrochen und von Neuem begonnen.

Verläuft die Bestätigung positiv, werden die vorliegenden Drücke der Reifen jeder Achse "x" drei Bewertungen unterzogen.

Zunächst kontrolliert eine Einrichtung 8, ob keiner der Reifen zwischen zwei Überwachungsroutinen einem zu großen Druckverlust unterliegt, also insbesondere ob eventuell ein Loch am Reifenmantel bzw. Luftschlauch vorliegt, durch welches Luft ausströmt. Hierzu wird für jeden Reifen die jeweilige Differenz aus dem während der vorangegangenen Überwachungsroutine gemessenen und gespeicherten Reifendruck $P_{x(t-1)}$ und dem aktuellen Reifendruck $P_x$ gebildet. Ist die Differenz größer als ein vorgebbarer Schwellwert $\Delta P$ wird eine Alarmanzeige 10 ausgelöst, die den Fahrer darauf hinweist, und die Überwachungsroutine daraufhin von Neuem begonnen. Ein Wert von 0.3 bar/min hat sich als geeigneter Schwellwert $\Delta P$ erwiesen.

Mittels zwei Grenzwertüberwachungseinrichtungen 9 und 11 werden anschließend die jeweiligen Luftdrücke der Reifen jeder Achse "x" in bezug auf die zulässigen Minimaldrücke überprüft. Liegt der niedrigere der entsprechenden Reifendrücke $P_{xl}$ und $P_{xr}$ unterhalb des kleineren Minimalgrenzwertes $P_{xa}$, im vorliegenden Beispiel unterhalb 2.1 bar, wird wiederum die Alarmanzeige 10 ausgelöst, die den Fahrer auf eine Notsituation hinweist, und die Überwachungsroutine daraufhin von Neuem begonnen. Andernfalls werden die Reifendrücke hinsichtlich des höheren Minimalgrenzwertes $P_{xw}$, im vorliegenden Beispiel hinsichtlich des Grenzwertes $P_{xw}$ = 2.4 bar überprüft. Liegt einer der aktuellen Reifendrücke unterhalb dieses Grenzwertes, wird eine Warnanzeige 12 ausgelöst, die den Fahrer auf einen zu niedrigen Luftdruck hinweist, und die Überwachungsroutine daraufhin von Neuem begonnen.

Sind alle Reifendrücke überprüft, ohne dass ein Fehler entdeckt worden ist, startet die erfindungsgemäße Vorrichtung die Überwachungsroutine von Neuem.

Es ist insbesondere vorgesehen, dass die Prüfung auf einen ungleichmäßigen Reifendruck gemäß Schritt 4 der Fig. 1 in jedem Fall und nicht nur bei Vorliegen eines gegenüber dem Normdruck erhöhten Reifendrucks erfolgt.

**Bezugszeichenliste**

1  Reifendruckerfassung
2  temperaturabhängige Minimalgrenzwertanpassung
3  Überprüfung gegenüber Sollwert
4  Überprüfung Reifendruckdifferenz
5  Warnmeldung
6  reifendruckabhängige Minimalgrenzwertanpassung
7  Bestätigung der Parameter
8  Überprüfung Druckverlust
9  Überprüfung gegenüber Alarmgrenzwert

10    Alarmmeldung
11    Überprüfung gegenüber Warngrenzwert
12    Warnmeldung

**Patentansprüche**

1.  Verfahren zum Überwachen von Reifendrücken bei einem Kraftfahrzeug, wobei wenigstens ein auf einem Reifendruck-Sollwert ($P_{xnorm}$) basierender Reifendruck-Minimalgrenzwert ($P_{xa}$, $P_{xw}$) bereitgestellt wird, **dadurch gekennzeichnet, dass** der wenigstens eine Reifendruck-Minimalgrenzwert ($P_{xa}$, $P_{xw}$) in Abhängigkeit gemessener, aktueller Reifendrücke ($P_{xl}$, $P_{vl}$, $P_{hl}$, $P_{xr}$, $P_{vr}$, $P_{hr}$) adaptiert wird.

2.  Verfahren nach Anspruch 1, **dadurch gekennzeichnet, dass** zum Adaptieren des wenigstens einen Reifendruck-Minimalgrenzwertes ($P_{xa}$, $P_{xw}$) jeweils die aktuellen Reifendrücke ($P_{xl}$, $P_{vl}$, $P_{hl}$, $P_{xr}$, $P_{vr}$, $P_{hr}$) von zumindest zwei Reifen gegenüber vorgebbaren Reifendruckparametern ($P_{xnorm}$, $\Delta P_{xw}$) verglichen werden.

3.  Verfahren nach Anspruch 1 oder 2, **dadurch gekennzeichnet, dass** zum Adaptieren des wenigstens einen Reifendruck-Minimalgrenzwertes ($P_{xa}$, $P_{xw}$) jeweils die aktuellen Reifendrücke ($P_{xl}$, $P_{xr}$) von einer Achse zugeordneten Reifen als Referenzdrücke verwendet werden.

4.  Verfahren nach einem der vorstehenden Ansprüche, **dadurch gekennzeichnet, dass** zumindest zwei aktuelle Reifendrücke ($P_{xl}$, $P_{xr}$) jeweils gegenüber einem zugeordneten Solldruck ($P_{xnorm}$) verglichen (3) werden, eine aktuelle Druckdifferenz (4) zwischen den zumindest zwei aktuellen Reifendrücken ($P_{xl}$, $P_{xr}$) gebildet und mit einer vorgebbaren maximalen Druckdifferenz ($\square P_{xw}$) verglichen wird, und bei Vorliegen von wenigstens einem gegenüber dem jeweiligen Solldruck ($P_{xnorm}$) erhöhten Reifendruck ($P_{xl}$, $P_{xr}$) und einer gegenüber der maximalen Druckdifferenz ($\Delta P_{xw}$) gleichen oder geringeren aktuellen Druckdifferenz der wenigstens eine Reifendruck-Minimalgrenzwert ($P_{xa}$, $P_{xw}$) für die zumindest zwei aktuellen Reifendrücke ($P_{xl}$, $P_{xr}$) angehoben wird.

5.  Verfahren nach Anspruch 4, **dadurch gekennzeichnet, dass** das Anheben des wenigstens einen Reifendruck-Minimalgrenzwertes ($P_{xa}$, $P_{xw}$) in funktionaler Abhängigkeit zu dem höheren aktuellen Reifendruck ($P_{xl}$, $P_{xr}$) erfolgt.

6.  Verfahren nach einem der vorstehenden Ansprüche, **dadurch gekennzeichnet, dass** eine aktuelle Druckdifferenz (4) zwischen zumindest zwei aktuellen Reifendrücken ($P_{xl}$, $P_{xr}$) gebildet und mit einer vorgebbaren maximalen Druckdifferenz ($\Delta P_{xw}$) verglichen wird, und bei Vorliegen einer gegenüber der maximalen Druckdifferenz ($\Delta P_{xw}$) größeren aktuellen Druckdifferenz eine Warnmeldung (5) ausgelöst wird.

7.  Verfahren nach einem der vorstehenden Ansprüche, **dadurch gekennzeichnet, dass** zumindest zwei aktuelle Reifendrücke ($P_{xl}$, $P_{xr}$) jeweils gegenüber einem zugeordneten Solldruck ($P_{xnorm}$) verglichen (3) werden, und bei Vorliegen von gegenüber dem jeweiligen Solldruck ($P_{xnorm}$) gleichen oder niedrigeren Reifendrücken ($P_{xl}$, $P_{xr}$) der wenigstens eine Sollwert-basierte Reifendruck-Minimalgrenzwert ($P_{xa}$, $P_{xw}$) für die zumindest zwei aktuellen Reifendrücke ($P_{xl}$, $P_{xr}$) zur Überwachung verwendet wird.

8.  Verfahren nach einem der vorstehenden Ansprüche, **dadurch gekennzeichnet, dass** zwei unterschiedlich hohe, in Abhängigkeit der aktuellen Reifendrücke adaptierbare Reifendruck-Minimalgrenzwerte ($P_{xa}$, $P_{xw}$) bereitgestellt werden.

9.  Verfahren nach einem der vorstehenden Ansprüche, **dadurch gekennzeichnet, dass** die Reifendrücke ($P_{xl}$, $P_{vl}$, $P_{hl}$, $P_{xr}$, $P_{vl}$, $P_{hr}$) auf ein Unterschreiten des wenigstens einen Reifendruck-Minimalgrenzwertes ($P_{xa}$, $P_{xw}$) überwacht werden und bei Unterschreiten durch wenigstens einen aktuellen Reifendruck eine Warnmeldung (12) und/oder Alarmmeldung (10) erzeugt wird.

10. Verfahren nach einem der vorstehenden Ansprüche, **dadurch gekennzeichnet, dass** die Reifendrücke ($P_{xl}$, $P_{vl}$, $P_{hl}$, $P_{xr}$, $P_{vl}$, $P_{hr}$) auf ein Überschreiten (8) eines vorgebbaren maximalen zeitbasierten Druckverlustes ($\Delta P$) überwacht werden und bei Überschreiten durch wenigstens einen aktuellen Reifendruck eine Alarmmeldung (10) erzeugt wird.

11. Verfahren nach einem der vorstehenden Ansprüche, **dadurch gekennzeichnet, dass** der wenigstens eine Reifendruck-Minimalgrenzwert ($P_{xa}$, $P_{xw}$) ferner in Abhängigkeit gemessener Temperaturwerte (T) adaptiert wird.

**12.** Verfahren nach einem der vorstehenden Ansprüche, **dadurch gekennzeichnet, dass** der wenigstens eine Reifendruck-Minimalgrenzwert ($P_{xa}$, $P_{xw}$) ferner in Abhängigkeit des barometrischen Höhendrucks adaptiert wird.

**13.** Vorrichtung zum Überwachen von Reifendrücken bei einem Kraftfahrzeug, wobei wenigstens ein auf einem Reifendruck-Sollwert ($P_{xnorm}$) basierender Reifendruck-Minimalgrenzwert ($P_{xa}$, $P_{xw}$) vorgebbar ist, **gekennzeichnet durch** eine Nachführeinrichtung (6) zum Nachführen des wenigstens einen Reifendruck-Minimalgrenzwertes ($P_{xa}$, $P_{xw}$) in Abhängigkeit gemessener, aktueller Reifendrücke ($P_{xl}$, $P_{vl}$, $P_{hl}$, $P_{xr}$, $P_{vr}$, $P_{hr}$).

**14.** Vorrichtung nach Anspruch 13, **gekennzeichnet durch**, Einrichtungen (3, 4) zum Überwachen der aktuellen Reifendrücke ($P_{xl}$, $P_{vl}$, $P_{hl}$, $P_{xr}$, $P_{vr}$, $P_{hr}$) gegenüber vorgebbaren Reifendruckparametern ($P_{xnorm}$, $\Delta P_{xw}$).

**15.** Vorrichtung nach Anspruch 13 oder 14, **gekennzeichnet durch** eine Kontrolleinrichtung (3) zum Überprüfen von jeweils zumindest zwei aktuellen Reifendrücken ($P_{xl}$, $P_{xr}$) gegenüber einem zugeordneten Solldruck ($P_{xnorm}$) und eine Einrichtung (4) zur Erfassung einer Druckdifferenz zwischen den zumindest zwei aktuellen Reifendrücken ($P_{xl}$, $P_{xr}$) und zum Vergleichen der Druckdifferenz mit einer vorgebbaren maximalen Druckdifferenz ($\Delta P_{xw}$).

**16.** Vorrichtung nach einem der Ansprüche 13 bis 15, **dadurch gekennzeichnet, dass** die Nachführeinrichtung (6) derart ausgebildet ist, dass bei Vorliegen von wenigstens einem gegenüber dem Solldruck ($P_{xnorm}$) erhöhten Reifendruck ($P_{xl}$, $P_{xr}$) das Nachführen des wenigstens einen Reifendruck-Minimalgrenzwertes ($P_{xa}$, $P_{xw}$) in funktionaler Abhängigkeit zu dem höheren aktuellen Reifendruck ($P_{xl}$, $P_{xr}$) erfolgt.

**17.** Vorrichtung nach einem der Ansprüche 13 bis 16, **gekennzeichnet durch** eine Überwachungseinrichtung (4), die eine aktuelle Druckdifferenz zwischen zumindest zwei aktuellen Reifendrücken ($P_{xl}$, $P_{xr}$) bildet und mit einer vorgebbaren maximalen Druckdifferenz ($\Delta P_{xw}$) vergleicht, und bei Vorliegen einer gegenüber der maximalen Druckdifferenz ($\Delta P_{xw}$) größeren aktuellen Druckdifferenz eine Warnanzeige (5) ansteuert.

**18.** Vorrichtung nach einem der Ansprüche 13 bis 17, **gekennzeichnet durch** eine Einrichtung (9, 11), die die aktuellen Reifendrücke ($P_{xl}$, $P_{vl}$, $P_{hl}$, $P_{xr}$, $P_{vl}$, $P_{hr}$) auf ein Unterschreiten des wenigstens einen Reifendruck-Minimalgrenzwertes ($P_{xa}$, $P_{xw}$) überwacht und bei Unterschreiten **durch** wenigstens einen aktuellen Reifendruck eine Warnanzeige (12) und/oder Alarmanzeige (10) ansteuert.

**19.** Vorrichtung nach einem der Ansprüche 13 bis 18, **gekennzeichnet durch** eine Einrichtung (8), die die aktuellen Reifendrücke ($P_{xl}$, $P_{vl}$, $P_{hl}$, $P_{xr}$, $P_{vl}$, $P_{hr}$) auf ein Überschreiten eines vorgebbaren maximalen zeitbasierten Druckverlustes ($\Delta P$) überwacht und bei Überschreiten **durch** wenigstens einen aktuellen Reifendruck eine Alarmanzeige (10) ansteuert.

**Claims**

**1.** Method for monitoring tyre pressures in a motor vehicle, wherein at least one tyre pressure minimum limit value ($P_{xa}$, $P_{xw}$) based on a desired tyre pressure value ($P_{xnorm}$) is provided, **characterised in that** the at least one tyre pressure minimum limit value ($P_{xa}$, $P_{xw}$) is adapted as a function of measured current tyre pressures ($P_{xl}$, $P_{vl}$, $P_{hl}$, $P_{xr}$, $P_{vr}$, $P_{hr}$).

**2.** Method according to Claim 1, **characterised in that** for the adaptation of the at least one tyre pressure minimum limit value ($P_{xa}$, $P_{xw}$) the current tyre pressures ($P_{xl}$, $P_{vl}$, $P_{hl}$, $P_{xr}$, $P_{vr}$, $P_{hr}$) from at least two tyres are respectively compared in relation to predetermined tyre pressure parameters ($P_{xnorm}$, $\Delta P_{xw}$).

**3.** Method according to Claim 1 or 2, **characterised in that** for the adaptation of the at least one tyre pressure minimum limit value ($P_{xa}$, $P_{xw}$) the current tyre pressures ($P_{xl}$, $P_{xr}$) from tyres associated with one axle are respectively used as reference pressures.

**4.** Method according to one of the preceding claims, **characterised in that** at least two current tyre pressures ($P_{xl}$, $P_{xr}$) are respectively compared (3) in relation to an associated desired pressure ($P_{xnorm}$), a current pressure difference (4) between the at least two current tyre pressures ($P_{xl}$, $P_{xr}$) is formed and is compared with a predetermined maximum pressure difference ($\Delta P_{xw}$), and when at least one elevated tyre pressure ($P_{xl}$, $P_{xr}$) in relation to the respective desired pressure ($P_{xnorm}$) and a current pressure difference equal to or lower than the maximum pressure difference ($\Delta P_{xw}$) are present, the at least one tyre pressure minimum limit value ($P_{xa}$, $P_{xw}$) is raised for the at least two current tyre pressures ($P_{xl}$, $P_{xr}$).

5. Method according to Claim 4, **characterised in that** the raising of the at least one tyre pressure minimum limit value ($P_{xa}$, $P_{xw}$) occurs as a function of the higher current tyre pressure ($P_{xl}$, $P_{xr}$).

6. Method according to one of the preceding claims, **characterised in that** a current pressure difference (4) is formed between at least two current tyre pressures ($P_{xl}$, $P_{xr}$) and is compared with a predetermined maximum pressure difference ($\Delta P_{xw}$), and when a higher current pressure difference than the maximum pressure difference ($\Delta P_{xw}$) is present, a warning message (5) is triggered.

7. Method according to one of the preceding claims, **characterised in that** at least two current tyre pressures ($P_{xl}$, $P_{xr}$) are respectively compared in relation to an associated desired pressure ($P_{xnorm}$), and when tyre pressures ($P_{xl}$, $P_{xr}$) equal to or lower than the respective desired pressure ($P_{xnorm}$) are present, the at least one tyre pressure minimum limit value ($P_{xa}$, $P_{xw}$) based on a desired value for the at least two current tyre pressures ($P_{xl}$, $P_{xr}$) is used for monitoring.

8. Method according to one of the preceding claims, **characterised in that** two tyre pressure minimum limit values ($P_{xa}$, $P_{xw}$) are provided, which differ in magnitude and can be adapted as a function of the current tyre pressures.

9. Method according to one of the preceding claims, **characterised in that** the tyre pressures ($P_{xl}$, $P_{vl}$, $P_{hl}$, $P_{xr}$, $P_{vr}$, $P_{hr}$) are monitored to determine whether they lie below the at least one tyre pressure minimum limit value ($P_{xa}$, $P_{xw}$), and when at least one current tyre pressure lies below this, a warning message (12) and/or an alarm message (10) is generated.

10. Method according to one of the preceding claims, **characterised in that** the tyre pressures ($P_{xl}$, $P_{vl}$, $P_{hl}$, $P_{xr}$, $P_{vr}$, $P_{hr}$) are monitored to determine whether they exceed (8) a predetermined maximum time-based pressure loss ($\Delta P$), and when at least one current tyre pressure exceeds this, an alarm message (10) is generated.

11. Method according to one of the preceding claims, **characterised in that** the at least one tyre pressure minimum limit value ($P_{xa}$, $P_{xw}$) is additionally adapted as a function of measured temperature values (T).

12. Method according to one of the preceding claims, **characterised in that** the at least one tyre pressure minimum limit value ($P_{xa}$, $P_{xw}$) is additionally adapted as a function of the altitude pressure.

13. Device for monitoring tyre pressures in a motor vehicle, wherein at least one tyre pressure minimum limit value ($P_{xa}$, $P_{xw}$) based on a desired tyre pressure value ($P_{xnorm}$) can be predetermined, **characterised by** a tracking system (6) for tracking the at least one tyre pressure minimum limit value ($P_{xa}$, $P_{xw}$) as a function of measured current tyre pressures ($P_{xl}$, $P_{vl}$, $P_{hl}$, $P_{xr}$, $P_{vr}$, $P_{hr}$).

14. Device according to Claim 13, **characterised by** systems (3, 4) for monitoring the current tyre pressures ($P_{xl}$, $P_{vl}$, $P_{hl}$, $P_{xr}$, $P_{vr}$, $P_{hr}$) in relation to predetermined tyre pressure parameters ($P_{xnorm}$, $\Delta P_{xw}$).

15. Device according to Claim 13 or 14, **characterised by** a control system (3) for respectively checking at least two current tyre pressures ($P_{xl}$, $P_{xr}$) in relation to an associated desired pressure ($P_{xnorm}$) and a system (4) for detecting a pressure difference between the at least two current tyre pressures ($P_{xl}$, $P_{xr}$) and for comparing the pressure difference with a predetermined maximum pressure difference ($\Delta P_{xw}$).

16. Device according to one of Claims 13 to 15, **characterised in that** the tracking system (6) is configured so that when at least one elevated tyre pressure ($P_{xl}$, $P_{xr}$) in relation to the desired pressure ($P_{xnorm}$) is present, the tracking of the at least one tyre pressure minimum limit value ($P_{xa}$, $P_{xw}$) occurs as a function of the higher current tyre pressure ($P_{xl}$, $P_{xr}$).

17. Device according to one of Claims 13 to 16, **characterised by** a monitoring system (4), which forms a current pressure difference between at least two current tyre pressures ($P_{xl}$, $P_{xr}$) and compares them with a predetermined maximum pressure difference ($\Delta P_{xw}$), and when a current pressure difference higher than the maximum pressure difference ($\Delta P_{xw}$) is present, actuates a warning display (5).

18. Device according to one of Claims 13 to 17, **characterised by** a system (9, 11), which monitors the current tyre

pressures ($P_{xl}$, $P_{vl}$, $P_{hl}$, $P_{xr}$, $P_{vr}$, $P_{hr}$) to determine whether they lie below the at least one tyre pressure minimum limit value ($P_{xa}$, $P_{xw}$), and when at least one current tyre pressure lies below this, actuates a warning display (12) and/or an alarm display (10).

19. Device according to one of Claims 13 to 18, **characterised by** a system (8), which monitors the current tyre pressures ($P_{xl}$, $P_{vl}$, $P_{hl}$, $P_{xr}$, $P_{vr}$, $P_{hr}$) to determine whether they exceed a predetermined maximum time-based pressure loss ($\Delta P$), and when at least one current tyre pressure exceeds this, actuates an alarm display (10).

**Revendications**

1. Procédé de surveillance de pression de pneumatique, dans un véhicule automobile, où au moins une valeur limite minimale de pression de pneumatique ($P_{xa}$, $P_{xw}$), se basant sur une valeur de consigne de pression de pneumatique ($P_{xnorm}$), est fournie, **caractérisé en ce que** la au moins une valeur minimale de pression de pneumatique ($P_{xa}$, $P_{xw}$) est adaptée en fonction de pression de pneumatique ($P_{xl}$, $P_{vl}$, $P_{hl}$, $P_{xr}$, $P_{vr}$, $P_{hr}$) réelles, mesurées.

2. Procédé selon la revendication 1, **caractérisé en ce que**, pour adapter la au moins une valeur limite minimale de pression de pneumatique ($P_{xa}$, $P_{xw}$), chaque fois les pressions de pneumatiques ($P_{xl}$, $P_{vl}$, $P_{hl}$, $P_{xr}$, $P_{vr}$, $P_{hr}$) réelles d'au moins deux pneumatiques sont comparés à des paramètres de pression de pneumatique ($P_{xnorm}$, $\Delta P_{xw}$) prédéterminables.

3. Procédé selon la revendication 1 ou 2, **caractérisé en ce que**, pour l'adaptation de la au moins une valeur limite minimale de pression de pneumatique ($P_{xa}$, $P_{xw}$), chaque fois les pressions de pneumatiques ($P_{xl}$, $P_{xr}$) réelles, de pneumatiques associés à un essieu, sont utilisées comme pressions de référence.

4. Procédé selon l'une des revendications précédentes, **caractérisé en ce qu'**au moins deux pressions de pneumatiques ($P_{xl}$, $P_{xr}$) réelles sont comparées (3), chaque fois à une pression de consigne ($P_{xnorm}$) associée, une différence de pression (4) réelle, entre les au moins deux pressions de pneumatiques ($P_{xl}$, $P_{xr}$) réelles, est formée et comparée à une différence de pression ($\Delta P_{xw}$) maximale prédéterminable, et, en cas de présence d'au moins une pression de pneumatique ($P_{xl}$, $P_{xr}$) augmentée par rapport à la pression de consigne ($P_{xnorm}$) respectiv,e et d'une différence de pression réelle et identique ou inférieure à la différence de pression ($\Delta P_{xw}$) maximale, la au moins une valeur limite minimale de pression de référence ($P_{xa}$, $P_{xw}$), pour les au moins deux pressions de pneumatiques ($P_{xl}$, $P_{xr}$), est augmentée.

5. Procédé selon la revendication 4, **caractérisé en ce que** l'augmentation de la au moins une valeur limite minimale de pression de référence ($P_{xa}$, $P_{xw}$) se fait en une relation fonctionnelle par rapport à la pression de pneumatique ($P_{xl}$, $P_{xr}$) réelle supérieure.

6. Procédé selon l'une des revendications précédentes, **caractérisé en ce qu'**une différence de pression (4) réelle, entre au moins deux pressions de pneumatiques ($P_{xl}$, $P_{xr}$) réelles, est formée et comparée à une différence de pression ($\Delta P_{xw}$) maximale prédéterminable, et, en cas de présence d'une différence de pression réelle, supérieure à la différence de pression ($\Delta P_{xw}$) maximale, une information d'avertissement (5) est déclenchée.

7. Procédé selon l'une des revendications précédentes, **caractérisé en ce qu'**au moins deux pressions de pneumatiques ($P_{xl}$, $P_{xr}$) réelles sont comparées (3) chaque fois à une pression de consigne ($P_{xnorm}$) associée, et, en cas de présence de pressions de pneumatiques ($P_{xl}$, $P_{xr}$), identiques ou inférieures à la pression de consigne ($P_{xnorm}$) respective, la au moins une valeur limite minimale de pression de pneumatique ($P_{xa}$, $P_{xw}$), basée sur une valeur de consigne, est utilisée pour surveiller les au moins deux pressions de pneumatiques ($P_{xl}$, $P_{xr}$) réelles.

8. Procédé selon l'une des revendications précédentes, **caractérisé en ce que** deux valeurs limites minimales de pressions de pneumatique ($P_{xa}$, $P_{xw}$) de valeurs différentes, adaptables en fonction des pressions de pneumatiques réelles, sont fournies.

9. Procédé selon l'une des revendications précédentes, **caractérisé en ce que** les pressions de pneumatiques ($P_{xl}$, $P_{vl}$, $P_{hl}$, $P_{xr}$, $P_{vr}$, $P_{hr}$) font l'objet d'une surveillance, pour détecter une descente au-dessous de la au moins une valeur limite minimale de pression de pneumatique ($P_{xa}$, $P_{xw}$), et une information d'avertissement (12) et/ou une information d'alarme (10) est générée au cas où au moins une pression de pneumatique réelle descend au-dessous de celle-ci.

**10.** Procédé selon l'une des revendications précédentes, **caractérisé en ce que** les pressions de pneumatiques ($P_{xl}$, $P_{vl}$, $P_{hl}$, $P_{xr}$, $P_{vr}$, $P_{hr}$) sont surveillées pour détecter un dépassement (8) d'une perte de pression ($\Delta P$) basée sur le temps maximale prédéterminable, et une information d'alarme (10) est générée en cas de dépassement par au moins une pression de pneumatique réelle.

**11.** Procédé selon l'une des revendications précédentes, **caractérisé en ce que** la au moins une valeur limite minimale de pression de pneumatique ($P_{xa}$, $P_{xw}$) est adaptée en outre, en fonction de valeurs de température (T) mesurées.

**12.** Procédé selon l'une des revendications précédentes, **caractérisé en ce que** la au moins une valeur limite minimale de pression de pneumatique ($P_{xa}$, $P_{xw}$) est en outre adaptée en fonction de la pression barométrique altimétrique.

**13.** Dispositif de surveillance de pression de pneumatique dans un véhicule automobile, pour lequel une valeur limite minimale de pression de pneumatique ($P_{xa}$, $P_{xw}$), se basant sur une valeur de consigne de pression de pneumatique ($P_{xnorm}$), est susceptible d'être prédéterminée, **caractérisé par** un dispositif de poursuite (6), pour la poursuite de la au moins une valeur limite minimale de pression de pneumatique ($P_{xa}$, $P_{xw}$) en fonction de pression de pneumatique ($P_{xl}$, $P_{vl}$, $P_{hl}$, $P_{xr}$, $P_{vr}$, $P_{hr}$) réelles mesurées.

**14.** Dispositif selon la revendication 13, **caractérisé par** des équipements (3, 4) surveillant les pressions de pneumatiques ($P_{xl}$, $P_{vl}$, $P_{hl}$, $P_{xr}$, $P_{vr}$, $P_{hr}$) réelles par rapport à des paramètres de pressions de pneumatique ($P_{xnorm}$, $\Delta P_{xw}$) pouvant être prédéterminés.

**15.** Dispositif selon la revendication 13 ou 14, **caractérisé par** un appareil de contrôle (3) pour vérifier chaque fois au moins deux pressions de pneumatiques ($P_{xl}$, $P_{xr}$) réelles, par rapport à une pression de consigne ($P_{xnorm}$) associée, et un appareil (4), pour détecter une différence de pression entre les au moins deux pressions de pneumatiques ($P_{xl}$, $P_{xr}$) réelles et pour comparer la différence de pression à une différence de pression ($\Delta P_{xw}$) maximale pouvant être prédéterminée.

**16.** Dispositif selon l'une des revendications 13 à 15, **caractérisé en ce que** le dispositif de poursuite (6) est réalisé de manière que, en cas de présence d'au moins une pression de pneumatique ($P_{xl}$ $P_{xr}$), augmentée par rapport à la pression de consigne ($P_{xnorm}$), la poursuite de la au moins une valeur limite minimale de pression de pneumatique ($P_{xa}$, $P_{xw}$) se fait en une relation fonctionnelle envers la pression de pneumatique ($P_{xl}$, $P_{xr}$) réelle supérieure.

**17.** Dispositif selon l'une des revendications 13 à 16, **caractérisé par** un appareil de surveillance (4), formant une différence de pression réelle, entre au moins deux pressions de pneumatiques ($P_{xl}$, $P_{xr}$) réelles, et comparant à une différence de pression ($\Delta P_{xw}$) maximale pouvant être prédéterminée, et, en cas de présence d'une différence de pression réelle, supérieure à la différence de pression maximale ($\Delta P_{xw}$), commandant un affichage d'avertissement (5).

**18.** Dispositif selon l'une des revendications 13 à 17, **caractérisé par** un appareil (9, 11) surveillant les pressions de pneumatiques réelles ($P_{xl}$, $P_{vl}$, $P_{hl}$, $P_{xr}$, $P_{vr}$, $P_{hr}$), pour détecter une descente au-dessous de la au moins une valeur limite minimale de pression de pneumatique ($P_{xa}$, $P_{xw}$) et, dans le cas où au moins une pression de pneumatique réelle descend au-dessous de cette valeur, commandant un affichage d'avertissement (12) et/ou un affichage d'alarme (10).

**19.** Dispositif selon l'une des revendications 13 à 18, **caractérisé par** un appareil (8), surveillant les pressions de pneumatiques ($P_{xl}$, $P_{vl}$, $P_{hl}$, $P_{xr}$, $P_{vr}$, $P_{hr}$) réelles, pour détecter un dépassement d'une perte de pression ($\Delta P$) basée sur le temps, maximale, pouvant être prédéterminée, et commandant un affichage d'alarme (10), en cas de dépassement par au moins une pression de pneumatique réelle.

Fig. 1

```
┌─────────────────────────────────┐
│  P_x1 = P_vl, P_vr               │──── 1
P──▶│  P_x2 = P_hl, P_hr               │◀───────────────┐
│                                 │                │
└─────────────────────────────────┘                │
            │                                       │
            ▼                                       │
┌─────────────────────────────────┐                │
│  P_xa=(P_xnorm - ΔP_xa)*T/T_norm │                │
T──▶│  P_xw=(P_xnorm - ΔP_xw)*T/T_norm │──── 2         │
│                                 │                │
└─────────────────────────────────┘                │
            │                                       │
            ▼                                       │
       ◇ max(P_xl, P_xr)>P_xnorm ◇ ──── 3          │
            │                                       │
            ▼                                       │
       ◇ |P_xl - P_xr | < ΔP_xw ◇ ──── 4  ───▶ [5]─▶│
            │                                       │
            ▼                                       │
┌─────────────────────────────────┐                │
│  P_xa=max(P_xl, P_xr) − ΔP_xa    │                │
│  P_xw=max(P_xl, P_xr) − ΔP_xw    │──── 6         │
└─────────────────────────────────┘                │
            │                                       │
            ▼                                       │
           ◇ ──── 7 ───────────────────────────────┤
            │                                       │
            ▼                                       │
 8 ── ◇ |P_x − P_x(t-1)| < ΔP ◇ ──────▶ [10]──────▶│
            │                           ▲           │
            ▼                           │           │
 9 ── ◇ min(P_xl, P_xr)>P_xa ◇ ─────────┘           │
            │                                       │
            ▼                                       │
11 ── ◇ min(P_xl, P_xr)>P_xw ◇ ──────▶ [12]───────▶│
```

$P_{x1} = P_{vl}, P_{vr}$
$P_{x2} = P_{hl}, P_{hr}$

$P_{xa}=(P_{xnorm} - \Delta P_{xa})*T/T_{norm}$
$P_{xw}=(P_{xnorm} - \Delta P_{xw})*T/T_{norm}$

$\max(P_{xl}, P_{xr})>P_{xnorm}$

$|P_{xl} - P_{xr}| < \Delta P_{xw}$

$P_{xa}=\max(P_{xl}, P_{xr}) - \Delta P_{xa}$
$P_{xw}=\max(P_{xl}, P_{xr}) - \Delta P_{xw}$

$|P_x - P_{x(t-1)}| < \Delta P$

$\min(P_{xl}, P_{xr})>P_{xa}$

$\min(P_{xl}, P_{xr})>P_{xw}$